# EUROPÄISCHE PATENTANMELDUNG

(11) **EP 0 915 062 A1**
(43) Veröffentlichungstag der Anmeldung: **12.05.1999**
(21) Anmeldenummer: 97250314.8
(22) Anmeldetag: 23.10.1997
(51) Int. Cl.: C03B 5/173, C03B 5/193

(54) **Verfahren zur Steuerung des Redoxzustandes, der Farbe und Verarbeitkeit von Glasschmelzen**

(71) Anmelder: Suwannathada, Pichanon, Dipl.-Ing, 09599 Freiberg (DE); Zimmermann, Harald, Dipl.-Ing. (FH), 09603 Grossschirma (DE); Hessenkemper, Heiko, Prof. Dr., 09603 Grossschirma (DE)
(72) Erfinder: Suwannathada, Pichanon, Dipl.-Ing, 09599 Freiberg (DE); Zimmermann, Harald, Dipl.-Ing. (FH), 09603 Grossschirma (DE); Hessenkemper, Heiko, Prof. Dr., 09603 Grossschirma (DE)
(74) Vertreter: Pobel, Dieter Dipl.-Chem.

(57) **Zusammenfassung**

Der Erfindung liegt die Aufgabe zugrunde, ein effizientes Verfahren zur Vergrößerung des Oberflächen - Volumen - Verhältnisses zu schaffen, das eine gezielte Steuerung des Redoxzustandes, der Farbe und Verarbeitbarkeit von Glasschmelzen gestattet.

Erfindungsgemäß erfolgt das Bubbeln unter Verwendung eines Wasserdampf - Gas - Gemisches in den variierbaren Bedingungen: Temperatur, Druck, Zusammensetzung und Menge.
Als Gase können verwendet werden: Sauerstoff, Wasserstoff, Argon, Helium, Kohlenmonoxid, Kohlendioxid, Schwefeldioxid, Luft, Verbrennungsgase, Chlor, Chlorwasserstoff, Fluor, Fluorwasserstoff und deren Gemische.

Dabei wird der für Farbe und Redoxzustand verantwortliche Sauerstoffpartialdruck über das Gas und die Blasengröße durch den Wasserdampf gezielt eingestellt, wobei die Austauschfläche zwischen Blasen und Schmelze drastisch vergrößert wird.
Diese Effekte sind auf eine Verringerung der Oberflächenspannung sowie der Viskosität der Schmelze zurückzuführen. Damit ermöglicht das Verfahren auch eine gezielte Beeinflussung der Verarbeitbarkeit der Schmelze.

## Beschreibung

Die Erfindung betrifft ein Verfahren zur Steuerung des Redoxzustandes, der Farbe und Verarbeitbarkeit von Glasschmelzen.

Bisher wird die Farbe und der Redoxzustand von Gläsern über die Zugabe von oxidierenden bzw. reduzierenden Komponenten zum Gemenge sowie über den Sauerstoffpartialdruck der Ofenatmosphäre gesteuert.
Wegen der großen Verweilzeiten der Glasschmelze im Schmelzaggregat und der geringen Oberflächen- Volumen- Verhältnisse bezüglich einer Reaktion mit der Ofenatmosphäre ist weder ein schnelles noch effektives Eingreifen in den Prozeß möglich, um Störeinflüssen entgegenzuwirken.

Im Zusammenhang mit dem Bubbeln mit Luft zur Unterstützung der Läuter- und Homogenisierungsprozesse wurden mehrfach Versuche unternommen, die Oberflächen- Volumen- Verhältnisse zu verbessern und das Einbringen höherer Wassergehalte zu ermöglichen. Diese Technologien blieben aufgrund zu großer Blasen erfolglos.

In vielen öl- und gasbefeuerten Schmelzwannen der Glasindustrie nutzt man das Bubbeln, um die Konvektionswalzen zu unterstützen. Speziell bei Farbschmelzen, die die Strahlungswärme aus dem Oberofen kaum nach unten weiterleiten, bringt man durch das Bubbeln das kältere Glas vom Boden zur Oberfläche.
In DE 26 24 122 wird das Bubbeln mit Wasserdampf während der Reaktionsphase der Schmelze beschrieben, wobei sich eine höhere Produktivität bei geringerer Brennstoffzufuhr ergibt. Die Schmelzreaktionen werden beschleunigt, und die Homogenität der Schmelze wird verbessert.
In EP 599 403 werden in einer zusätzlichen Kammer, die sich an eine gewöhnliche Schmelzwanne anschließt, färbende Komponenten, wie Fritten, Scherben und Farboxide zugegeben. Der Mischvorgang wird mit Hilfe mehrerer Bubblingzonen verwirklicht.

Der Erfindung liegt die Aufgabe zugrunde, ein effizientes Verfahren zur Vergrößerung der Oberflächen- Volumen-Verhältnisse zu schaffen, das eine gezielte Steuerung des Redoxzustandes, der Farbe und Verarbeitbarkeit ermöglicht.

Das erfindungsgemäße Wasserdampf - Gas - Gemisch zur Steuerung des Redoxzustandes, der Farbe und Verarbeitbarkeit von Glasschmelzen wird über Bubblingdüsen dem Schmelzaggregat zugeführt.
Temperatur, Druck, Menge und Zusammensetzung kann in weiten Bereichen variieren. Der Wasserdampf besitzt eine Temperatur von 70 bis 300°C und einen Druck von 30 kPa bis 7 MPa, das Gas dagegen einen Druck von 50 kPa bis 100 MPa.
Der Anteil des Wasserdampfes im Wasserdampf - Gas - Gemisch kann zwischen 1 und 99 Vol-% liegen.
Als Gase können verwendet werden: Sauerstoff, Stickstoff, Wasserstoff, Argon, Helium, Kohlenmonoxid, Kohlendioxid, Schwefeldioxid, Luft, Verbrennungsgase, Chlor, Chlorwasserstoff, Fluor, Fluorwasserstoff oder deren Gemische.

Über das Gas des Wasserdampf - Gas - Gemisches wird der Sauerstoffpartialdruck innerhalb der Blasen reguliert, der wiederum für das sich in der Schmelze einstellende Gleichgewicht polyvalenter Ionen verantwortlich ist. Dieses Gleichgewicht spiegelt den Redoxzustand wieder und läßt sich als Farbe im erkalteten Glas wiederfinden.
Der Wasserdampf bewirkt eine Reduzierung der Oberflächenspannung und ermöglicht je nach zugegebener Menge eine Regulierung der Blasengröße. Weiterhin werden die Austauschflächen an den Blasenoberflächen durch Bildung einer Vielzahl von Mikroblasen drastisch vergrößert.
Ebenso läßt sich der Wassergehalt der Glasschmelze beeinflussen, was wiederum eine gezielte Veränderung der Verarbeitbarkeit der Schmelze bezüglich deren Viskosität - Zeit - Verhaltens möglich macht.

Das Viskosität - Zeit - Verhalten ist maßgeblich für den Formgebungsprozeß von Hohl- und Preßglas von Bedeutung, während die Oberflächenspannung einer der Hauptparameter für die Einstellung der Gleichgewichtsdicke beim Floatprozeß ist. Damit lassen sich mit dem erfindungsgemäßen Verfahren diese Prozesse erstmals gezielt über die Eigenschaften der Schmelze beeinflussen.
Diese Effekte sind auf eine Verringerung der Oberflächenspannung sowie der Viskosität der Schmelze zurückzuführen.
Schließlich macht dieses Verfahren je nach Schmelzaggregat den Einsatz von Läutermitteln überflüssig, da die Läuterung aufgrund der riesigen Austauschflächen mit den Blasen selbsttätig abläuft.

Die Erfindung soll nachstehend an einem Ausführungsbeispiel im Labormaßstab näher erläutert werden.
Ein für die Massenglasindustrie taugliches Alkali - Erdalkali-Silicatglas ( 74 Gew.-% SiO₂, 16 Gew.-% Na₂O, 9,5 Ge.-% CaO und 0,5 Gew.-% Fe₂O₃) wird aus einem entsprechenden Gemenge im Mittelfrequenzofen erschmolzen. Im Zustand der Rauhschmelze wird bei Erreichen von ca. 1400° C ein Keramikröhrchen von oben in die Schmelze getaucht. Dieses ist mit einem temperatur- und druckbeständigen Schlauch mit dem Dampferzeuger (druckbeständiger Spezialglaskessel mit Heizwendel und Druckmeßgerät) gekoppelt. Dem Dampferzeuger wird wiederum aus Gasflaschen über Mischventile das Gasgemisch zugeführt, wobei die Zusammensetzung das Gasgemisches über Durchflußmesser geregelt wird.

Mit dieser Anordnung und vordefinierten Einstellungen von Druck und Gasmischung werden zunächst aus identischen Gemengesätzen eine Vielzahl von Gläsern mit unterschiedlichen Einstellungen erschmolzen. Durch spektroskopische Messungen am kalten Glas werden anschließend die Redoxdaten und Wassergehalte ermittelt. Die Korrelation zwischen Einstellungen und den Meßergebnissen erlauben im folgenden Versuch mit einer gezielten Variation der Redoxdaten und Wassergehalte im voraus auf die Einstellparameter Druck und Volumenströme Einfluß zu nehmen.
Es zeigte sich, daß die Blasengröße in erster Linie eine Funktion des Dampfdruckes ist. Die Geschwindigkeit, mit der sich das Redoxgleichgewicht und der Wassergehalt einstellen, ist in erster Linie eine Funktion der Blasengröße und Austauschfläche der Blasen; daher ebenfalls eine Funktion des Dampfdruckes.
Außerdem ergibt sich, daß je höher der Dampfdruck ist, desto kürzer ist die notwendige Bubbelzeit.
Das erfindungsgemäß hergestellte Glas ist extrem homogen und schlierenfrei.
An industriellen Glasschmelzaggregaten ist es entscheidend, die Blasengröße beim Bubbeln klein zu halten, um die Austauschfläche so groß wie möglich zu halten.
Je nach der Glasbadtiefe und -temperatur in der vorgesehenen Bubbelzone muß demnach ein Mindestdampfdruck eingestellt sein. Das bedeutet, daß im Regelfall ein durch die Randbedingungen gegebener Mindestwassergehalt in der Schmelze nicht unterschritten werden kann.

## Patentansprüche

1. Verfahren zur Steuerung des Redoxzustandes, der Farbe und Verarbeitbarkeit von Glasschmelzen, dadurch gekennzeichnet, daß das Bubbeln mit einem Wasserdampf - Gas - Gemisch durchgeführt wird.

2. Verfahren nach Anspruch 1, dadurch gekennzeichnet, daß das Wasserdampf - Gas - Gemisch durch Temperatur, Druck, Menge und Zusammensetzung variiert wird.

3. Verfahren nach Anspruch 1 und 2, dadurch gekennzeichnet, daß der Wasserdampf eine Temperatur von 70 bis 300° C und einen Druck von 30 kPa bis 7 MPa besitzt.

4. Verfahren nach Anspruch 1 und 2, dadurch gekennzeichnet, daß der Anteil des Wasserdampfes im Wasserdampf - Gas - Gemisch 1 bis 99 Vol-% beträgt.

5. Verfahren nach Anspruch 1 und 2, dadurch gekennzeichnet, daß das Gas einen Druck von 50 kPa bis 100 MPa besitzt.

6. Verfahren nach Anspruch 1, dadurch gekennzeichnet, daß als Gase Sauerstoff, Stickstoff, Wasserstoff, Argon, Helium, Kohlenmonoxid, Kohlendioxid, Schwefeldioxid, Luft, Verbrennungsgase, Chlor, Chlorwasserstoff, Fluor, Fluorwasserstoff oder deren Gemische verwendet werden.
